# EUROPÄISCHE PATENTANMELDUNG

(11) **EP 1 418 483 A1**
(43) Veröffentlichungstag der Anmeldung: **12.05.2004**
(21) Anmeldenummer: 02018903.1
(22) Anmeldetag: 23.08.2002
(51) Int. Cl.: G06F 1/00

(54) **Überprüfung und Einräumung von Nutzungsberechtigungen**

(71) Anmelder: SIEMENS AKTIENGESELLSCHAFT, 80333 München (DE)
(72) Erfinder: Schaub, Peter, 81379 München (DE)

(57) **Zusammenfassung**

In einem System zur Überprüfung und Einräumung von Nutzungsberechtigungen ist auf einer Speicherkarte zumindest ein biometrisches Merkmal eines Nutzungsinteressenten gespeichert ist. Durch eine Leseeinrichtung werden auf der Speicherkarte befindlichen Daten ausgelesen. Eine von der Speicherkarte räumlich getrennte Abtasteinrichtung ist zur Erfassung zumindest eines biometrischen Merkmals des Nutzungsinteressenten vorgesehen. In einer Vergleichseinrichtung werden das durch die Abtasteinrichtung erfaßte biometrische Merkmal und das auf der Speicherkarte gespeicherte biometrische Merkmal auf Übereinstimmung überprüft. Zur Übermittlung des durch die Abtasteinrichtung erfaßten biometrischen Merkmals und des auf der Speicherkarte gespeicherten biometrischen Merkmals an die Vergleichseinrichtung ist eine Datenübertragungseinrichtung vorgesehen. Durch eine mit der Vergleichseinrichtung verbindbare Programmsteuerungseinrichtung werden computerbasierte Objekte für den Nutzungsinteressenten abhängig von einer Übereinstimmung des durch die Abtasteinrichtung erfaßten biometrischen Merkmals mit dem auf der Speicherkarte gespeicherten biometrischen Merkmal bereitgestellt.

## Beschreibung

Die vorliegende Erfindung betrifft ein System zur Überprüfung und Einräumung von Nutzungsberechtigungen, ein Verfahren zur Überprüfung und Einräumung von Nutzungsberechtigungen und ein Programm für eine Programmsteuerungseinrichtung.

Eine Benutzung von Speicherkarten in Verbindung mit einer PIN (personal identification number) zur Überprüfung und Einräumung von Nutzungsberechtigungen ist sowohl mit Sicherheitsals auch mit Komforteinbußen verbunden. Mittels biometrischer Verfahren, wie elektronische Fingerabdruckerfassung, können sowohl Sicherheitsprobleme behoben als auch Komfortnachteile gemildert werden. Jedoch weisen bekannte Speicherkarten mit integrierten Fingerabdrucksensoren ergonomische Nachteile auf. Beispielsweise sind Einschubschächte bei Speicherkartenlesegeräten verhältnismäßig tief, so daß die Speicherkarten recht weit in die Einschubschächte eingeführt werden müssen und relativ wenig Platz um den Fingerabdrucksensor herum für eine bequeme Abtastung eines Fingerabdrucks verbleibt. Ein weiteres ergonomisches Problem stellen in ein Rechnergehäuse integrierte Speicherkartenlesegeräte je nach Anordnung des Rechners relativ zu einem Nutzer dar. An zahlreichen Rechnerarbeitsplätzen ist der Rechner nämlich für den Nutzer verhältnismäßig ungünstig erreichbar angeordnet, beispielsweise unter einem Tisch.

Der vorliegenden Erfindung liegt die Aufgabe zugrunde, ein ergonomisches Verfahren zur Überprüfung und Einräumung von Nutzungsberechtigungen an Programmsteuerungseinrichtungen zu schaffen sowie ein zur Durchführung des Verfahrens geeignetes System und ein Programm für die Programmsteuerungseinrichtung anzugeben.

Diese Aufgabe wird erfindungsgemäß durch ein System mit den in Anspruch 1 angegebenen Merkmalen, ein Verfahren mit den in Anspruch 6 angegebenen Merkmalen und ein Programm mit den in Anspruch 10 angegebenen Merkmalen gelöst. Vorteilhafte Weiterbildungen der Erfindung sind in den abhängigen Ansprüchen angegeben.

Ein wesentlicher Aspekt der vorliegenden Erfindung besteht darin, daß ein auf einer Speicherkarte gespeichertes biometrisches Merkmal und ein an einer von einer Speicherkartenleseeinrichtung räumlich getrennten Abtasteinrichtung erfaßtes biometrisches Merkmal zur Bereitstellung von computerbasierten Objekten an einer Programmsteuerungseinrichtung auf Übereinstimmung verglichen werden. Da das biometrische Merkmal erfindungsgemäß nicht über eine in die Speicherkarte integrierte Abtasteinrichtung erfaßt wird, ergibt sich der Vorteil, daß die Speicherkartenleseeinrichtung und die Abtasteinrichtung unabhängig von einander jeweils ergonomisch optimiert angeordnet werden können.

Unter Programmsteuerungseinrichtung sind beispielsweise ohne Beschränkung der Allgemeinheit dieses Begriffs PCs, Notebooks, Server, PDAs, Mobiltelefone, Geldautomaten, Steuerungsmodule in der Automatisierungs-, Fahrzeug-, Kommunikations- oder Medizintechnik zu verstehen - allgemein Einrichtungen, in denen Computerprogramme ablaufen. Des weiteren sind computerbasierten Objekte beispielsweise ohne Beschränkung der Allgemeinheit dieses Begriffs Betriebssysteme, Steuerungs- oder Anwendungsprogramme, durch Betriebssysteme, Steuerungs- oder Anwendungsprogramme bereitgestellte Dienste, Leistungsmerkmale, Funktionen oder Prozeduren, Zugriffsrechte auf Peripheriegeräte sowie auf einem Speichermedium befindliche Daten. Funktionen oder Prozeduren umfassen dabei insbesondere auch eine Geldausgabe an einem Geldautomaten.

Die vorliegende Erfindung wird nachfolgend an einem Ausführungsbeispiel anhand der Zeichnung näher erläutert. Es zeigt
- Figur 1: eine schematische Darstellung eines Systems zur Überprüfung und Einräumung von Nutzungsberechtigungen an einer Programmsteuerungseinrichtung,
- Figur 2: eine Ablaufdiagramm für ein Verfahren zur Überprüfung und Einräumung von Nutzungsberechtigungen.

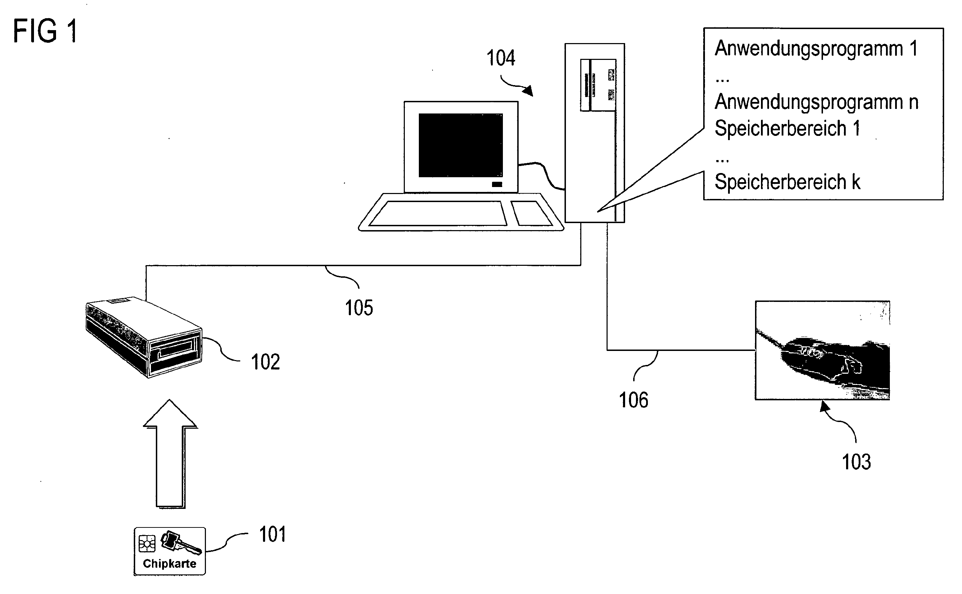

Das in Figur 1 dargestellte System zur Überprüfung und Einordnung von Nutzungsberechtigungen umfaßt eine Leseeinrichtung 102 zum Auslesen von auf einer Chipkarte 101 befindlichen Daten, eine von der Leseeinrichtung 102 räumlich getrennte Abtasteinrichtung 103 und ein Anwendungsprogramm und Speicherbereich für einen Nutzer bereitstellenden Computer 104. Die Leseeinrichtung 102 und die Abtasteinrichtung 103 sind über Datenübertragungsleitungen 105, 106 mit dem Computer 104 verbunden. Die Datenübertragungsleitungen 105, 106 sind am Computer 104 an übliche Schnittstellen angeschlossen, wie parallele Schnittstelle, serielle Schnittstelle oder USB-Schnittstelle.

Die Abtasteinrichtung 103 dient zur Erfassung zumindest eines biometrischen Merkmals eines Nutzungsinteressenten. Beim vorliegenden Ausführungsbeispiel ist die Abtasteinrichtung 103 als Fingerabdrucksensor ausgebildet, der in ein Computer-Eingabegerät, wie eine Maus, integriert sein kann. Für eine Anwendung der vorliegenden Erfindung ist auch eine Abtastung anderer biometrischer Merkmale denkbar, wie Iriserkennung oder Abtastung der Gesichtszüge.

Auf der Chipkarte 101 ist neben zumindest einem biometrischen Merkmal, wie dem Fingerabdruck des Nutzungsinteressenten, ein öffentlicher und ein privater Schlüssel zur Durchführung eines asymmetrischen Verschlüsselungsverfahren abgespeichert.

Die Chipkarte 101 ist bevorzugt als Smart-Card ausgebildet, so daß durch ein entsprechend angepaßtes Smart-Card-Betriebssystem ein nicht authentisiertes Auslesen des privaten Schlüssels unterbunden werden kann.

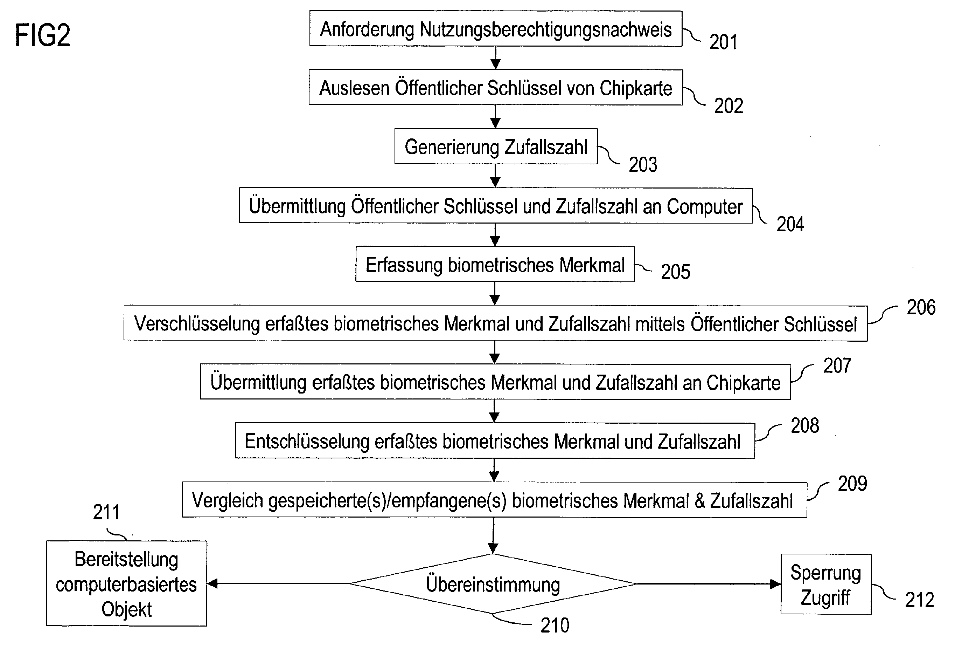

Auf dem Computer 104 ist ein Anwendungs- oder Betriebssystemprogramm installiert, das in einem Arbeitsspeicher des Computers 104 ladbar ist, und dessen Programmcode durch eine Zentraleinheit des Computers 104 ausführbar ist. Bei einer Ausführung des Anwendungs- oder Betriebssystemprogramms und einer Zugriffsanforderung des Nutzungsinteressenten auf ein durch das Anwendungs- oder Betriebssystemprogramm bereitgestelltes computerbasiertes Objekt wird ein Nutzungsberechtigungsnachweis angefordert. Dies entspricht Schritt 201 innerhalb des in Figur 2 dargestellten Ablaufdiagramms zur Durchführung des Verfahrens zur Überprüfung und Einräumung von Nutzungsberechtigungen. Bei Anforderung des Nutzungsberechtigungsnachweises durch das Anwendungs- oder Betriebssystemprogramm wird vom Computer 104 über die Datenübertragungsleitung 105 eine Steuerungsanweisung an die Leseeinrichtung 102 übermittelt. Durch die Steuerungsanweisung wird ein Auslesen des auf der Chipkarte 101 gespeicherten öffentlichen Schlüssels (Schritt 202) und eine Generierung einer Zufallszahl durch die Chipkarte 101 (Schritt 203) veranlaßt. Die generierte Zufallszahl bleibt bis zur Beendigung des Überprüfungs- und Einräumungsverfahrens auf der Chipkarte 101 abgespeichert.

Der von der Chipkarte 101 ausgelesene öffentliche Schlüssel und die Zufallszahl werden an den Computer 104 übermittelt (Schritt 204). Nachfolgend wird vom Computer 104 eine Steuerungsanweisung zur Erfassung eines biometrischen Merkmals an die Abtasteinrichtung 103 über die Datenverbindungsleitung 106 übermittelt, worauf mittels des in die Maus integrierten Fingerabdrucksensors der Fingerabdruck des Nutzungsinteressenten als biometrisches Merkmal erfaßt und an den Computer 104 übermittelt wird (Schritt 205). Mittels des von der Leseeinrichtung 102 empfangenen öffentlichen Schlüssels werden dann im Computer 104 das erfaßte biometrische Merkmal und die generierte Zufallszahl verschlüsselt (Schritt 206) und an die Chipkarte 101 übermittelt (Schritt 207).

Durch ein auf der Chipkarte 101 installiertes Ver- und Entschlüsselungsprogramm werden dann das vom Computer 104 übermittelte biometrische Merkmal und die Zufallszahl mittels des auf der Chipkarte 101 gespeicherten privaten Schlüssels entschlüsselt (Schritt 208). Durch eine auf der Chipkarte 101 gespeicherte Vergleichsroutine, die in Verbindung mit der Chipkarte 101 eine Vergleichseinrichtung implementiert, werden das empfangene biometrische Merkmal und die empfangene Zufallszahl mit dem auf der Chipkarte 101 gespeicherten biometrischen Merkmal und der auf der Chipkarte 101 gespeicherten Zufallszahl verglichen (Schritt 209) und nachfolgend auf Übereinstimmung überprüft (Schritt 210).

Bei Übereinstimmung wird durch die Chipkarte 101 im Rahmen der Anforderung des Nutzungsberechtigungsnachweises ein positiver Rückgabewert für das auf dem Computer 104 installierte Anwendungs- oder Betriebssystemprogramm erzeugt und an dieses übermittelt. Bei fehlender Übereinstimmung wird in entsprechender Weise ein negativer Rückgabewert erzeugt und an das Anwendungs- oder Betriebssystemprogramm übermittelt. Als Reaktion auf den von der Chipkarte 101 übermittelten Rückgabewert erfolgt entweder eine Bereitstellung des durch den Nutzungsinteressenten angeforderten computerbasierten Objekts (Schritt 211) oder eine Sperrung des Zugriffs auf das angeforderte computerbasierte Objekt (Schritt 212).

Entsprechend einer bevorzugten Ausführungsform der vorliegenden Erfindung sind das biometrische Merkmal und die generierte Zufallszahl auf der Chipkarte 101 mittels des öffentlichen Schlüssels verschlüsselt abgespeichert, so daß nur die Chipkarte 101 in der Lage ist, das vom Computer 104 an die Chipkarte 101 übermittelte, erfaßte biometrische Merkmal und die Zufallszahl zu entschlüsseln und in die ursprünglichen Bestandteile, nämlich biometrisches Merkmal und Zufallszahl, zu zerlegen.

Die verwendete Zufallszahl dient dazu, daß ein einmal durch die Abtasteinrichtung 103 erfaßtes biometrisches Merkmal für nachfolgende Anforderungen von Nutzungsberechtigungsnachweisen nicht noch einmal verwendet werden kann. Im Rahmen einer Anforderung eines Nutzungsberechtigungsnachweises wird nämlich bevorzugt jedes Mal eine neue Zufallszahl erzeugt, so daß zwar der abgetastete Fingerabdruck bei einem nachfolgenden Nutzungsberechtigungsnachweis wiederverwendet werden kann nicht aber die Zufallszahl, die nur der Chipkarte 101 bekannt ist. Die Zufallszahl kann je nach Sicherheitsanforderungen eine unterschiedliche Wortbreite haben.

Die Anwendung der vorliegenden Erfindung ist nicht auf das hier beschriebe Ausführungsbeispiel beschränkt.

## Patentansprüche

1. System zur Überprüfung und Einräumung von Nutzungsberechtigungen mit
- einer Speicherkarte, auf der zumindest ein biometrisches Merkmal eines Nutzungsinteressenten gespeichert ist,
- einer Leseeinrichtung zum Auslesen von auf der Speicherkarte befindlichen Daten,
- einer von der Speicherkarte räumlich getrennten Abtasteinrichtung zur Erfassung zumindest eines biometrischen Merkmals des Nutzungsinteressenten,
- einer Vergleichseinrichtung zur Überprüfung des durch die Abtasteinrichtung erfaßten biometrischen Merkmals und des auf der Speicherkarte gespeicherten biometrischen Merkmals auf Übereinstimmung
- einer Datenübertragungseinrichtung zur Übermittlung des durch die Abtasteinrichtung erfaßten biometrischen Merkmals und des auf der Speicherkarte gespeicherten biometrischen Merkmals an die Vergleichseinrichtung.
- einer mit der Vergleichseinrichtung verbindbaren Programmsteuerungseinrichtung zur Bereitstellung von computerbasierten Objekten für den Nutzungsinteressenten abhängig von einer Übereinstimmung des durch die Abtasteinrichtung erfaßten biometrischen Merkmals mit dem auf der Speicherkarte gespeicherten biometrischen Merkmal.

2. System nach Anspruch 1,
bei dem die Vergleichseinrichtung ein Bestandteil der Speicherkarte ist.

3. System nach einem der Ansprüche 1 oder 2,
bei dem die Speicherkarte als Smart-Card ausgebildet ist.

4. System nach einem der Ansprüche 1 bis 3,
bei dem die Abtasteinrichtung einen Fingerabdruck-Sensor umfaßt.

5. System nach einem der Ansprüche 1 bis 4,
bei dem das biometrische Merkmal auf der Speicherkarte verschlüsselt abgespeichert ist.

6. Verfahren zur Überprüfung und Einräumung von Nutzungsberechtigungen, bei dem
- an einer Abtasteinrichtung zumindest ein biometrisches Merkmal eines Nutzungsinteressenten erfaßt wird,
- das durch die Abtasteinrichtung erfaßte biometrische Merkmal und zumindest ein auf einer von der Abtasteinrichtung räumlich getrennten Speicherkarte gespeichertes biometrisches Merkmal des Nutzungsinteressenten auf Übereinstimmung überprüft werden,
- abhängig von einer Übereinstimmung des durch die Abtasteinrichtung erfaßten biometrischen Merkmals mit dem auf der Speicherkarte gespeicherten biometrischen Merkmal durch eine Programmsteuerungseinrichtung zumindest ein computerbasiertes Objekt für den Nutzungsinteressenten bereitgestellt wird.

7. Verfahren nach Anspruch 6,
bei dem das durch die Abtasteinrichtung erfaßte biometrische Merkmal mittels eines von der Speicherkarte gelesenen Schlüssels verschlüsselt und an eine Vergleichseinrichtung zur Überprüfung des durch die Abtasteinrichtung erfaßten biometrischen Merkmals und des auf der Speicherkarte gespeicherten biometrischen Merkmals auf Übereinstimmung übermittelt wird.

8. Verfahren nach Anspruch 7,
bei dem mittels des von der Speicherkarte gelesenen Schlüssels zusätzlich zu dem durch die Abtasteinrichtung erfaßten biometrischen Merkmal eine durch die Speicherkarte erzeugte und von dieser ausgelesene Zufallszahl verschlüsselt, an die Vergleichseinrichtung übermittelt und eine Überprüfung der durch die Speicherkarte erzeugten Zufallszahl und der an die Vergleichseinrichtung übermittelten Zufallszahl auf Übereinstimmung vorgenommen wird.

9. Verfahren nach einem der Ansprüche 7 oder 8,
bei dem das durch die Abtasteinrichtung erfaßte biometrische Merkmal mittels eines asymmetrischen Verschlüsselungsverfahrens ver- und entschlüsselt wird.

10. Programm für eine Programmsteuerungseinrichtung, das in einen Arbeitsspeicher einer Programmsteuerungseinrichtung ladbar ist und zumindest einen Codeabschnitt aufweist, bei dessen Ausführung
- durch die Programmsteuerungseinrichtung abhängig von einer überprüften Übereinstimmung zumindest eines durch eine Abtasteinrichtung erfaßten biometrischen Merkmals eines Nutzungsinteressenten mit zumindest einem auf einer von der Abtasteinrichtung räumlich getrennten Speicherkarte gespeicherten biometrischen Merkmal des Nutzungsinteressenten zumindest ein computerbasiertes Objekt für den Nutzungsinteressenten bereitgestellt wird,
wenn das Programm auf der Programmsteuerungseinrichtung abläuft.
